# EUROPÄISCHE PATENTSCHRIFT

(11) **EP 3 956 165 B1**
(45) Veröffentlichungstag und Bekanntmachung des Hinweises auf die Patenterteilung: **30.11.2022**
(21) Anmeldenummer: 20716387.4
(22) Anmeldetag: 17.03.2020
(51) Int. Cl.: B60K 6/365, B60K 6/442, B60K 6/387, B60W 10/02, B60W 20/20

(54) **SCHALTEINRICHTUNG FÜR EIN HYBRIDES ANTRIEBSSYSTEM EINES KRAFTFAHRZEUGES; ANTRIEBSSYSTEM SOWIE KRAFTFAHRZEUG**
SELECTOR DEVICE FOR A HYBRID DRIVE SYSTEM OF A MOTOR VEHICLE, DRIVE SYSTEM, AND MOTOR VEHICLE
DISPOSITIF DE COMMUTATION POUR UN SYSTÈME D'ENTRAÎNEMENT HYBRIDE D'UN VÉHICULE AUTOMOBILE ; SYSTÈME D'ENTRAÎNEMENT AINSI QUE VÉHICULE AUTOMOBILE

(30) Priorität: 16.04.2019 DE 102019110044
(43) Veröffentlichungstag der Anmeldung: 23.02.2022
(73) Patentinhaber: Schaeffler Technologies AG & Co. KG, 91074 Herzogenaurach (DE)
(72) Erfinder: HOPPE, Marcus, 77855 Achern (DE); PIEPER, Torsten, 76356 Weingarten (DE)
(86) Internationale Anmeldenummer: PCT/DE2020/100208
(87) Internationale Veröffentlichungsnummer: WO 2020/211894

(56) Entgegenhaltungen:
- CA-A1- 2 523 771
- DE-A1-102011 085 201
- DE-A1-102017 200 724
- GB-A- 2 445 838

## Beschreibung

Die Erfindung betrifft eine Schalteinrichtung für ein hybrides Antriebssystem eines Kraftfahrzeuges. Des Weiteren betrifft die Erfindung das Antriebssystem an sich mit dieser Schalteinrichtung sowie ein Kraftfahrzeug mit dem Antriebssystem, wobei das Antriebssystem vorzugsweise als ein serieller Hybridantrieb umgesetzt ist. Das Antriebssystem weist weiterhin auf typische Weise zwei Elektromotoren auf, von denen ein erster Elektromotor hauptsächlich als Generator eingesetzt ist und ein zweiter Elektromotor hauptsächlich als Antriebsmotor eingesetzt ist. Auch weist das Antriebssystem eine Getriebeeinheit auf, die eine Ausgangswelle einer Verbrennungskraftmaschine, die Elektromotoren sowie ein ausgangsseitiges Antriebsteil miteinander in Wirkverbindung setzt.

Gattungsgemäße Antriebssysteme sind aus dem Stand der Technik bereits hinlänglich bekannt. Bspw. offenbart die DE 10 2017 206 510 A1 eine Getriebestruktur für ein serielles / paralleles Hybridfahrzeug. DE 10 2011 085201 A1 offenbart eine Schalteinrichtung für ein hybrides Antriebssystem eines Kraftfahrzeuges.

Es sind somit bereits Antriebssysteme bekannt, mit denen ein "serieller" Hybrid umsetzbar ist, wobei ein direkter Durchtrieb der Verbrennungskraftmaschine hin zu den Antriebsrädern / Rädern des Kraftfahrzeuges ausgeführt wird. Bei den aus dem Stand der Technik bekannten Ausführungen treten jedoch häufig zumindest einige der folgenden Nachteile auf. Durch die aus dem Stand der Technik bekannten Antriebssysteme ist die Höchstgeschwindigkeit des Kraftfahrzeuges beschränkt. Das entsprechende Fahrzeug kann deshalb meist nur eine Höchstgeschwindigkeit von ca. 180 km/h umsetzen. Für stärkere Motorisierungen und/oder höhere Fahrzeugklassen sind diese Antriebssysteme kaum geeignet oder gar ungeeignet. Im Weiteren besteht ein Nachteil darin, dass die vorhandene Getriebestruktur des bekannten Antriebssystems bedingt, dass beide Elektromotoren bei Höchstgeschwindigkeit mitdrehen, wenn der Hauptantrieb über die Verbrennungskraftmaschine erfolgt. Daraus folgt, dass die Elektromotoren bei hohen Fahrgeschwindigkeiten relativ hohe Schleppverluste erzeugen. Daraus folgt wiederum, dass bzgl. der Elektromotoren ein Auslegungskompromiss zwischen maximaler Drehzahl und dem maximalen Radmoment zu finden ist. Daraus ergibt sich weiterhin, dass nur ein eingeschränkter Anhängerbetrieb mit dem Fahrzeug möglich ist. Zudem sind die Elektromotoren meist konzeptbedingt mit einer für den seriellen Betrieb ungünstigen Übersetzung an die Verbrennungskraftmaschine gekoppelt. Ein weiterer Nachteil besteht in den bekannten Ausführungen darin, dass die beiden vorderen Elektromotoren meist axial in Reihe nebeneinander angeordnet sind, was bei Front-Quer-Bauweise der Verbrennungskraftmaschine sowie insbesondere bei kleinen Fahrzeugen problematisch ist.

Es ist daher die Aufgabe der vorliegenden Erfindung, die aus dem Stand der Technik bekannten Nachteile zu beheben und insbesondere ein Antriebssystem zur Verfügung zu stellen, das hinsichtlich seines Wirkungsgrades verbessert ist, Fahrten mit hohen Geschwindigkeiten ermöglicht sowie kompakt aufgebaut ist.

Dies wird erfindungsgemäß durch den Gegenstand des Anspruchs 1 gelöst. Demnach ist eine Schalteinrichtung für ein hybrides Antriebssystem eines Kraftfahrzeuges vorgesehen. Die Schalteinrichtung weist eine zentral angeordnete Welle, ein relativ zu der Welle verdrehbar gelagertes erstes Zahnrad und ein relativ zu der Welle verdrehbar gelagertes, entlang der Welle versetzt zu dem ersten Zahnrad angeordnetes zweites Zahnrad auf. Zudem weist die Schalteinrichtung eine unmittelbar in dem ersten Zahnrad verschiebbar aufgenommene sowie drehfest mit dem ersten Zahnrad verbundene Schiebehülse auf, welche Schiebehülse derart ausgebildet ist, dass sie in einer ersten Verschiebestellung die Welle drehfest mit dem ersten Zahnrad verbindet, während das zweite Zahnrad rotatorisch von der Welle entkoppelt ist, in einer zweiten Verschiebestellung die Welle sowohl mit dem ersten Zahnrad als auch mit dem zweiten Zahnrad rotatorisch verbindet und in einer dritten Verschiebestellung die beiden Zahnräder miteinander rotatorisch verbindet, während die Welle von den beiden Zahnrädern rotatorisch entkoppelt ist.

Durch den Einsatz der Schalteinrichtung sind in einer Getriebeeinheit die Übersetzungen der beiden Elektromotoren unabhängig voneinander wählbar. Darüber hinaus ist eine optimierte Kennfeldabstimmung zwischen einer Verbrennungskraftmaschine und einem, hauptsächlich als Generator wirkenden, ersten Elektromotor durch eine separate Zahnradstufe erleichtert. Durch die Schalteinrichtung wird weiterhin eine Einrichtung zur Verfügung gestellt, die es erlaubt, das Kraftfahrzeug deutlich effizienter zu betreiben. Auch höhere Geschwindigkeiten, bspw. Höchstgeschwindigkeiten von 250 km/h, sind dadurch möglich. Auch kann ein einen Fahrmotor / Antriebsmotor bildender zweiter Elektromotor bei höheren Geschwindigkeiten auf einfache Weise "abgeworfen" werden, um Schleppverluste zu vermeiden. Auch kann der zweite Elektromotor einfach auf das maximale Radmoment ausgelegt werden, wobei das Radmoment auch für Anhängerbetrieb auslegbar ist.

Weitere vorteilhafte Ausführungen sind mit den Unteransprüchen beansprucht und nachfolgend näher erläutert.

Demnach ist es weiterhin von Vorteil, wenn die Schiebehülse eine Rastkontur aufweist, in welche Rastkontur ein Rastelement (einer Rastiereinheit) in der jeweiligen Verschiebestellung blockierend eingreift. Dadurch wird die Funktion der Schalteinrichtung weiter verbessert.

In diesem Zusammenhang ist es auch zweckmäßig, wenn das Rastelement in dem ersten Zahnrad aufgenommen ist. Dadurch wird die Schalteinrichtung noch kompakter realisiert.

Vorteilhaft ist es ebenfalls, wenn die Schiebehülse einen mit der Welle zusammenwirkenden ersten Verbindungsbereich und einen mit dem zweiten Zahnrad zusammenwirkenden, axial vernetzt zu dem ersten Verbindungsbereich angeordneten, zweiten Verbindungsbereich aufweist. Dies ermöglicht eine besonders kompakte Bauweise der Schiebehülse.

Weiterhin ist es zweckmäßig, wenn ein mit dem ersten Verbindungsbereich koppelbarer (erster) Übertragungsbereich der Welle zu einer ersten axialen Seite des ersten Zahnrades hin angeordnet ist und ein mit dem zweiten Verbindungsbereich koppelbarer (zweiter) Übertragungsbereich des zweiten Zahnrades zu einer der ersten axialen Seite abgewandten zweiten axialen Seite des Zahnrades hin angeordnet ist.

Eine besonders verlässliche Funktion der Schalteinrichtung wird gewährleistet, wenn ein Aktuator, vorzugsweise als ein Linearmotor realisiert, über einen Hebelmechanismus auf die Schiebehülse verschiebend einwirkt.

Diesbezüglich ist es zudem zweckmäßig, wenn ein Hebelelement des Hebelmechanismus mit einem ersten Ende in eine Aufnahmekontur an der Schiebehülse eingreift und mit einem dem ersten Ende gegenüberliegenden zweiten Ende durch den Aktuator zum Schwenken um einen gehäusefesten Schwenkpunkt beaufschlagbar ist.

Des Weiteren betrifft die Erfindung ein Antriebssystem für ein hybrides Kraftfahrzeug, wie einen Pkw, einen Lkw, einen Bus oder ein sonstiges Nutzfahrzeug, welches Antriebssystem eine mit einer Ausgangswelle einer Verbrennungskraftmaschine rotatorisch koppelbare oder gekoppelte Motorwelle, einen eine erste Rotorwelle aufweisenden, in einem Hauptbetriebszustand als Generator betriebenen ersten Elektromotor, einen eine radial versetzt zu der ersten Rotorwelle angeordnete zweite Rotorwelle aufweisenden, in dem Hauptbetriebszustand als Antriebsmotor betriebenen zweiten Elektromotor, einen mit der zweiten Rotorwelle rotatorisch verbundenes und mit zumindest einem Rad des Kraftfahrzeuges rotatorisch verbindbares Antriebsteil sowie eine zwischen der Motorwelle, den beiden Rotorwellen und dem Antriebsteil wirkend eingesetzte, schaltbare Getriebeeinheit aufweist. Zudem ist eine eine Schaltstellung der Getriebeeinheit steuernde und nach zumindest einer der zuvor beschriebenen Ausführungen ausgebildete erfindungsgemäße Schalteinrichtung zwischen der Motorwelle, einem mit der ersten Rotorwelle permanent rotatorisch gekoppelten ersten Zahnrad und einem mit der zweiten Rotorwelle über eine zusätzliche Planetengetriebestufe permanent rotatorisch gekoppelten zweiten Zahnrad derart wirkend eingesetzt, dass die Schalteinrichtung in einer ersten Schaltstellung die Motorwelle mit der ersten Rotorwelle rotatorisch verbindet, während die zweite Rotorwelle von der Motorwelle rotatorisch entkoppelt ist, in einer zweiten Schaltstellung die Motorwelle sowohl mit der ersten Rotorwelle als auch mit der zweiten Rotorwelle rotatorisch verbindet und in einer dritten Schaltstellung die beiden Rotorwellen miteinander rotatorisch verbindet, während die Motorwelle von den beiden Rotorwellen rotatorisch entkoppelt ist. Des Weiteren ist es von Vorteil, wenn die Planetengetriebestufe durch ein Planetenteilgetriebe ausgebildet ist, von welchem Planetenteilgetriebe ein Sonnenrad unmittelbar mit der zweiten Rotorwelle permanent verbunden ist, ein mehrere Planetenräder lagernder Planetenträger mit einem Zwischenzahnrad, das sich in Zahneingriff mit dem zweiten Zahnrad befindet, verbunden ist und ein Hohlrad mittels einer Bremseinrichtung fahrzeugrahmenfest anordenbar / abstützbar ist. Dadurch ist der zweite Elektromotor geschickt ansteuerbar.

Des Weiteren betrifft die Erfindung ein (Hybrid-)Kraftfahrzeug mit dem Antriebssystem nach zumindest einer der zuvor beschriebenen Ausführungen, wobei das Antriebsteil mit den Rädern des Kraftfahrzeuges rotatorisch gekoppelt ist.

Eine besonders effiziente Bauweise des Kraftfahrzeuges ist gewährleistet, wenn die Verbrennungskraftmaschine mit ihrer Ausgangswelle quer zu einer Fahrzeuglängsachse (des Kraftfahrzeuges) angeordnet ist und/oder der Antriebsteil mit Rädern einer Antriebsachse rotatorisch verbunden ist.

In anderen Worten ausgedrückt, ist somit erfindungsgemäß eine Schalteinrichtung an einer Getriebeeingangswelle bzw. Zwischenwelle (Welle) für eine Hybridstruktur realisiert. Das Schaltelement (Schalteinrichtung) weist zwei Synchronisiereinheiten mit den entsprechenden Synchronisierzahnrädern auf, wobei eine Verschiebehülse (Schiebehülse) mit einem Aktor / Aktuator gekoppelt ist und eine Verriegelung (Rastiereinheit) für verschiedene Schaltpositionen aufweist. Die Elemente der Verriegelung sind in einem Zahnrad, das mit dem Generator gekoppelt ist, integriert.

Die Erfindung wird nun nachfolgend anhand von Figuren näher erläutert, in welchem Zusammenhang auch verschiedene Ausführungsbeispiele dargestellt sind.

Es zeigen:
- Fig. 1: eine schematische Schnittansicht eines erfindungsgemäßen Antriebssystems nach einem ersten Ausführungsbeispiel, wobei besonders gut der Aufbau einer eine Verbrennungskraftmaschine sowie zwei Elektromotoren mit einem Antriebsteil eines Differentialgetriebes koppelnden Getriebeeinheit zu erkennen ist,
- Fig. 2: eine schematische Schnittansicht eines erfindungsgemäßen Antriebssystems nach einem zweiten Ausführungsbeispiel, das sich von dem ersten Ausführungsbeispiel im Wesentlichen durch Anordnung eines mit einem zweiten Elektromotor gekoppelten Zwischenzahnrades unterscheidet,
- Fig. 3: eine Längsschnittdarstellung einer nach einem bevorzugten Ausführungsbeispiel umgesetzten, in dem jeweiligen Antriebssystem der Fign. 1 und 2 eingesetzten Schalteinrichtung, wobei sich eine die Schaltstellung der Schalteinrichtung vorgebende Schiebehülse in einer ersten Verschiebestellung befindet, in der eine zentrale Motorwelle mit einem mit einem ersten Elektromotor gekoppelten ersten Zahnrad rotatorisch verbunden ist,
- Fig. 4: ein Diagramm zur Veranschaulichung unterschiedlicher, durch die Antriebssysteme der Fign. 1 und 2 umsetzbarer Betriebszustände,
- Fig. 5: eine Längsschnittdarstellung der Schalteinrichtung, ähnlich zur Fig. 3, wobei sich die Schiebehülse in einer im Vergleich zu Fig. 3 geänderten zweiten Verschiebestellung befindet, in welcher zweiten Verschiebestellung sowohl die Motorwelle als auch ein mit einem zweiten Elektromotor gekoppeltes zweites Zahnrad mit dem ersten Zahnrad rotatorisch verbunden sind, sowie
- Fig. 6: eine Längsschnittdarstellung der Schalteinrichtung, ähnlich zu Fig. 3, wobei die Schiebehülse eine dritte Verschiebestellung einnimmt, in der die Motorwelle im Vergleich zu Fig. 5 von dem ersten Zahnrad sowie dem zweiten Zahnrad rotatorisch entkoppelt ist.

Die Figuren sind lediglich schematischer Natur und dienen ausschließlich dem Verständnis der Erfindung. Die gleichen Elemente sind mit denselben Bezugszeichen versehen. Auch sind die unterschiedlichen Merkmale der verschiedenen Ausführungsbeispiele prinzipiell frei miteinander kombinierbar.

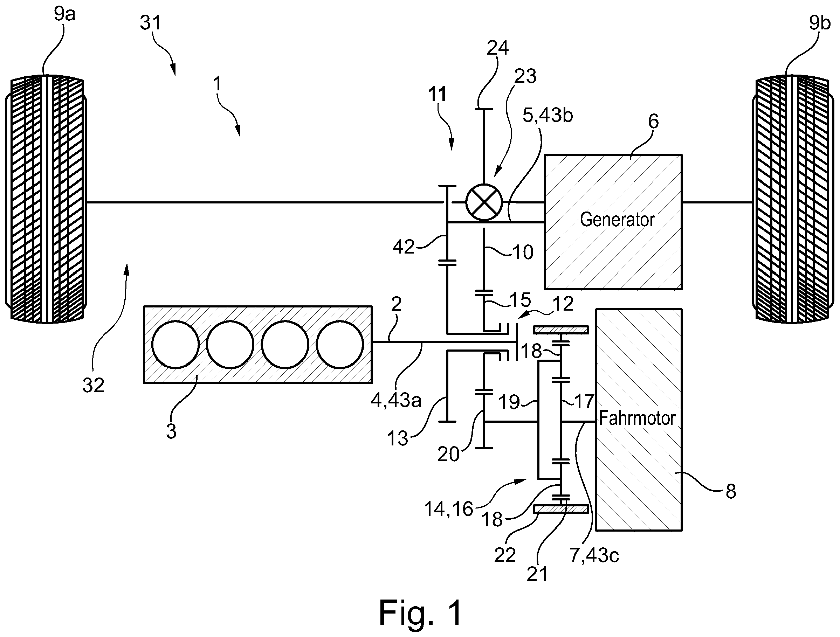

In Verbindung mit Fig. 1 ist zunächst ein Antriebssystem 1 nach einem bevorzugten ersten Ausführungsbeispiel veranschaulicht. Das Antriebssystem 1 ist in einem hybriden Kraftfahrzeug integriert, welches Kraftfahrzeug mit dem Bezugszeichen 31 angedeutet ist. Insbesondere ist in dieser Ausführung eine Antriebsachse 32 des Kraftfahrzeuges 31 (hier Vorderachse, alternativ auch Hinterachse) mit dargestellt, wobei Räder 9a, 9b der Antriebsachse 32 über verschiedene Maschinen (Verbrennungskraftmaschine 3 sowie Elektromotoren 6, 8) des Antriebssystems 1 antreibbar ist. Eine Verbrennungskraftmaschine 3 des Antriebssystems 1 befindet sich in dieser Ausführung in einer bevorzugten Front-Quer-Anordnung, in der eine Längsachse der Verbrennungskraftmaschine 3, d. h. eine (erste) Drehachse 43a einer Ausgangswelle 2 (Kurbelwelle) der Verbrennungskraftmaschine 3 quer, hier senkrecht, zu einer Längsachse (Fahrzeuglängsachse) des Kraftfahrzeuges 31 ausgerichtet ist.

Gemäß der Ausbildung des Antriebssystems 1 als serieller Hybridantrieb, weist das Antriebssystem 1 neben der Verbrennungskraftmaschine 3 auch zwei Elektromotoren 6, 8 auf. Ein erster Elektromotor 6 ist in der Fig. 1 mit Generator bezeichnet und demnach in einem Hauptbetriebszustand als Generator wirkend eingesetzt. Der erste Elektromotor 6 ist jedoch prinzipiell, etwa für ein rein elektrisches Rückwärtsfahren als Antriebsmotor schaltbar. Ein zweiter Elektromotor 8, der eine durch den ersten Elektromotor 6 generierte elektrische Leistung verbraucht, ist als Antriebsmotor / Fahrmotor umgesetzt.

Die beiden Elektromotoren 6, 8 sind mit Drehachsen 43b, 43c ihrer Rotorwellen 5, 7 in radialer Richtung versetzt zueinander angeordnet. Der erste Elektromotor 6 weist eine erste Rotorwelle 5 auf, die um eine (zweite) Drehachse 43b drehbar gelagert ist. Der zweite Elektromotor 8 weist eine zweite Rotorwelle 7 auf, die um eine (dritte) Drehachse 43c drehbar gelagert ist. Der erste Elektromotor 6 ist gesamtheitlich, d.h. auch samt seines hier der Übersichtlichkeit halber nicht dargestellten Stators und seines relativ zu dem Stator drehbar angeordneten Rotor, der mit der ersten Rotorwelle 5 drehfest verbunden ist, in radialer Richtung der zweiten Drehachse 43b versetzt zu dem gesamten zweiten Elektromotor 8 samt seines Stators und seines relativ zu dem Stator drehbar angeordneten, mit der zweiten Rotorwelle 7 drehfest verbundenen Rotors angeordnet. Auch sind die beiden Elektromotoren 6, 8 relativ zu der ersten Drehachse 43a der Ausgangswelle 2 der Verbrennungskraftmaschine 3 radial versetzt angeordnet. Entlang der Fahrzeuglängsachse gesehen, befindet sich die erste Drehachse 43a zwischen der zweiten Drehachse 43b und der dritten Drehachse 43c.

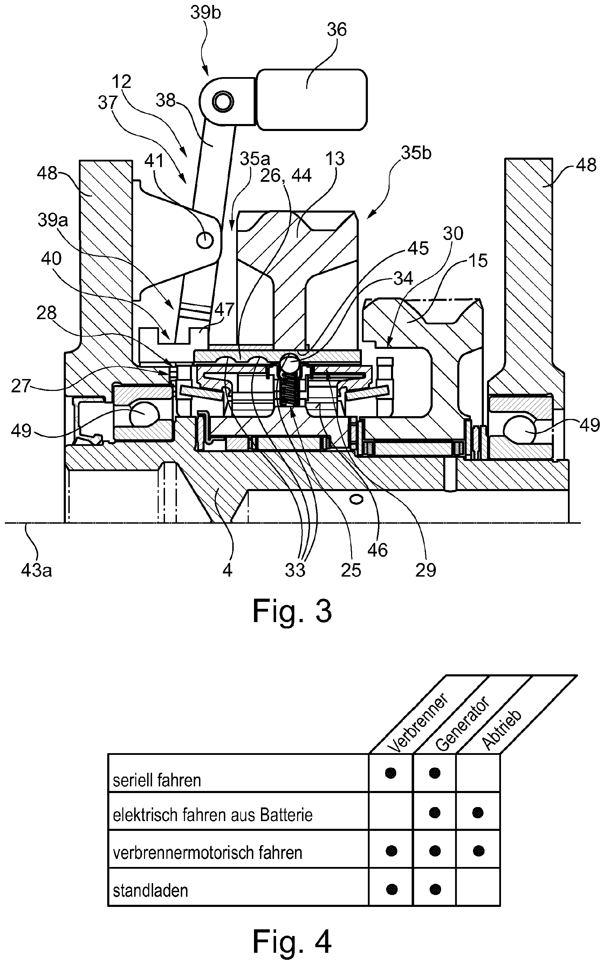

Zum Umsetzen der unterschiedlichen in Fig. 4 angedeuteten Betriebszustände des Antriebssystems 1 ist zwischen der Verbrennungskraftmaschine 3 / der Ausgangswelle 2, den beiden Elektromotoren 6, 8 mit ihren beiden Rotorwellen 5, 7 und einem Antriebsteil 10 des Antriebssystems 1 eine Getriebeeinheit 11 vorgesehen. Die Getriebeeinheit 11 ist als Schaltgetriebe realisiert und zur Umsetzung der verschiedenen Betriebszustände in verschiedene Schaltstellungen verbringbar. Die Getriebeeinheit 11 ist durch eine erfindungsgemäße Schalteinrichtung 12, die nachfolgend in Bezug auf die Fign. 3, 5 und 6 näher beschrieben ist, ansteuerbar.

Die Getriebeeinheit 11 weist eine zentral angeordnete Motorwelle 4 (auch vereinfacht als Welle bezeichnet) auf, die mit der Ausgangswelle 2 drehfest gekoppelt ist bzw. unmittelbar durch einen Bereich der Ausgangswelle 2 umgesetzt ist. Die Motorwelle 4 ist koaxial zu der Ausgangswelle 2 angeordnet und somit um die gemeinsame erste Drehachse 43a drehbar. Die Getriebeeinheit 11 weist zudem ein erstes Zahnrad 13 auf, welches erste Zahnrad 13 permanent mit der ersten Rotorwelle 5 drehfest verbunden / gekoppelt ist. Das erste Zahnrad 13 ist koaxial zu der Motorwelle 4 angeordnet. Das erste Zahnrad 13 ist als Hohlwellenzahnrad / Hohlwelle ausgebildet und radial von außen auf der Motorwelle 4 drehbar gelagert. Zur drehfesten Verbindung des ersten Zahnrades 13 mit der ersten Rotorwelle 5 ist ein weiteres (drittes) Zahnrad 42 vorgesehen, welches dritte Zahnrad 42 drehfest auf der ersten Rotorwelle 5 angeordnet ist und sich in Zahneingriff mit dem ersten Zahnrad 13 befindet. Das dritte Zahnrad 42 wird ebenfalls als Bestandteil der Getriebeeinheit 11 angesehen.

Des Weiteren weist die Getriebeeinheit 11 ein zweites Zahnrad 15 auf, welches zweite Zahnrad 15 zur Koppelung mit der zweiten Rotorwelle 7 dient. Das zweite Zahnrad 15 ist in axialer Richtung der Motorwelle 4, d. h. entlang der ersten Drehachse 43a betrachtet, neben dem ersten Zahnrad 13 angeordnet. Auch das zweite Zahnrad 15 ist als Hohlwellenzahnrad / Hohlwelle realisiert und radial von außen auf der Motorwelle 4 drehbar gelagert. Das zweite Zahnrad 15 ist in dieser Ausführung über ein Zwischenzahnrad 20 mit einer Planetengetriebestufe 14 verbunden. Die Planetengetriebestufe 14 ist weiter mit der zweiten Rotorwelle 7 rotatorisch verbunden. Wie aus Fig. 1 weiterhin zu erkennen ist, ist das mit dem zweiten Zahnrad 15 kämmende Zwischenzahnrad 20 unmittelbar drehfest mit einem Planetenträger 19 der ein Planetenteilgetriebe 16 bildenden Planetengetriebestufe 14 verbunden. Das Planetenteilgetriebe 16 der Getriebeeinheit 11 weist zudem auf typische Weise ein Sonnenrad 17 auf, das unmittelbar drehfest mit der zweiten Rotorwelle 7 verbunden ist. Mit dem Sonnenrad 17 befinden sich wiederum mehrere in Umfangsrichtung verteilt angeordnete Planetenräder 18, die auf dem Planetenträger 19 drehbar aufgenommen sind, in Zahneingriff. Ein mit den Planetenrädern 18 weiterhin in Zahneingriff stehendes Hohlrad 21 wirkt mit einer Bremseinrichtung 22 zusammen. Die gehäusefeste, d. h. fahrzeugrahmenfeste, Bremseinrichtung 22 hält in ihrem aktivierten Zustand das Hohlrad 21 relativ zu einem Fahrzeugrahmen fest. In ihrem deaktivierten Zustand ist eine freie Verdrehung des Hohlrades 21 gegenüber dem Fahrzeugrahmen ermöglicht, sodass die Bremseinrichtung 22 das Hohlrad 21 rotatorisch freigibt.

Das zweite Zahnrad 15 befindet sich in dem ersten Ausführungsbeispiel zudem in drehfester Verbindung mit dem Antriebsteil 10. Das Antriebsteil 10 weist eine Verzahnung 24 auf, mit der sich das zweite Zahnrad 15 in Zahneingriff befindet. Das Antriebsteil 10 ist hier als ein Eingangsrad eines Differentialgetriebes 23 der Antriebsachse 32 ausgestaltet. Das Antriebsteil 10 ist folglich permanent mit den beiden dargestellten Rädern 9a, 9b des Kraftfahrzeuges 31 rotatorisch verbunden.

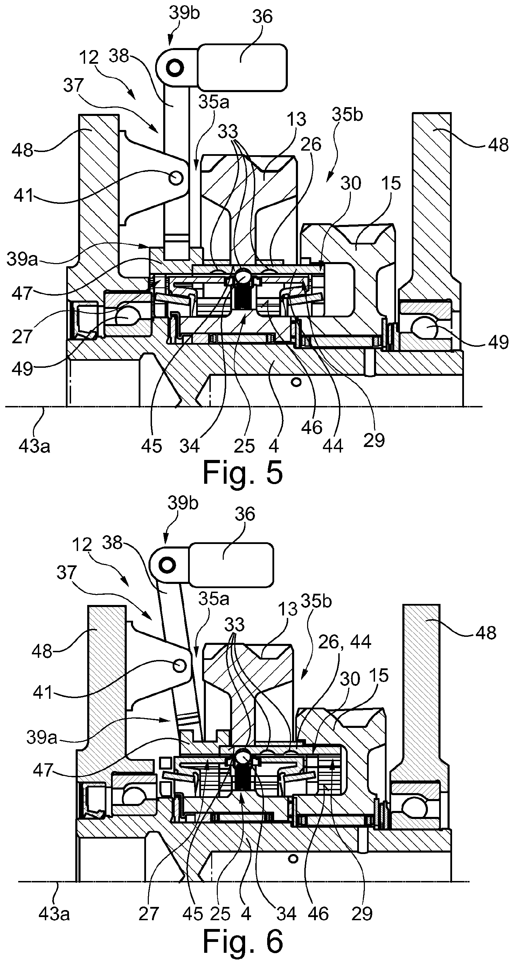

Erfindungsgemäß ist zwischen der Motorwelle 4 und den beiden Rotorwellen 5, 7, nämlich den beiden mit den Rotorwellen 5, 7 gekoppelten Zahnrädern 13 und 15, die Schalteinrichtung 12 wirkend eingesetzt. Die in Fig. 3 näher dargestellte Schalteinrichtung 12 ist prinzipiell derart ausgebildet, dass sie in ihrer ersten Schaltstellung die Motorwelle 4 mit der ersten Rotorwelle 5 rotatorisch koppelt / verbindet, während die zweite Rotorwelle 7 von der Motorwelle 4 (sowie der ersten Rotorwelle 5) rotatorisch entkoppelt ist (Fig. 3). In einer zweiten Schaltstellung der Schalteinrichtung 12 ist die Motorwelle 4 sowohl mit der ersten Rotorwelle 5 als auch mit der zweiten Rotorwelle 7 rotatorisch verbunden / gekoppelt (Fig. 5). In einer dritten Schaltstellung der Schalteinrichtung 12 sind die beiden Rotorwellen 5, 7 miteinander rotatorisch verbunden / gekoppelt, während die Motorwelle 4 von den beiden Rotorwellen 5, 7 rotatorisch entkoppelt ist (Fig. 6).

Die Schalteinrichtung 12 ist zumindest teilweise unmittelbar in dem ersten Zahnrad 13 integriert. Die Schalteinrichtung 12 weist eine Schiebehülse 26 auf, die entlang der zentralen ersten Drehachse 43a axial verschiebbar in dem ersten Zahnrad 13 aufgenommen ist. Durch Verschieben dieser Schiebehülse 26 in unterschiedliche Verschiebestellungen lassen sich die in den Fign. 3, 5 und 6 veranschaulichten unterschiedlichen Schaltstellungen der Schalteinrichtung 12 verwirklichen. Die Schiebehülse 26 weist einen Grundkörper 44 auf, der unmittelbar in einem Aufnahmeloch 45 in Form eines Durchgangsloches innerhalb des ersten Zahnrades 13 verschiebbar aufgenommen ist. Die Schiebehülse 26 ist zudem unmittelbar drehfest mit dem ersten Zahnrad 13 gekoppelt. Die Schiebehülse 26 weist eine Innenverzahnung 46 auf, die mit verschiedenen Übertragungsbereichen 28, 30 an der Motorwelle 4 und dem zweiten Zahnrad 15 zusammenwirkt. Neben dem Grundkörper 44 ist der Schiebehülse 26 ein Schiebeteil 47 zugeordnet, welches Schiebeteil 47 mit einem ersten Ende 39a eines Hebelelementes 38 verbunden ist. Das Schiebeteil 47 weist zu seiner radialen Außenseite hin eine Aufnahmekontur 40 auf, in der das erste Ende 39a formschlüssig eingreift. Das Schiebeteil 47 ist an dem Grundkörper 44 befestigt. Die als Axialverzahnung / Kerbverzahnung umgesetzte Innenverzahnung 46 ist in dem Schiebeteil 47 und dem Grundkörper 44 durchgängig eingebracht.

Das Hebelelement 38 ist Bestandteil eines Hebelmechanismus 37, der zum Koppeln eines als Linearmotor umgesetzten Aktuators 36 mit der Schiebehülse 26 dient. Das Hebelelement 38 ist in Bezug auf einen Schwenkpunkt 41 an einem Gehäuse 48 drehbar / schwenkbar abgestützt. Ein dem ersten Ende 39a entgegengesetztes zweites Ende 39b des Hebelelementes 38 befindet sich unmittelbar mit dem Aktuator 36 in Wirkzusammenhang. Somit ist die Schiebehülse 26 durch den Aktuator 36 in ihrer Verschiebestellung einstellbar.

Die Schiebehülse 26 weist einen ersten Verbindungsbereich 27 auf, der hier einen ersten Verzahnungsbereich der Innenverzahnung 46 darstellt. Der erste Verbindungsbereich 27 ist mit einem ersten Übertragungsbereich 28 (ebenfalls als Verzahnungsbereich realisiert) seitens der Motorwelle 4 formschlüssig in Drehrichtung koppelbar. In der in Fig. 3 dargestellten ersten Schaltstellung (entsprechend erster Verschiebestellung der Schiebehülse 26) ist die Motorwelle 4 durch Zahneingriff des ersten Übertragungsbereichs 28 in dem ersten Verbindungsbereich 27 drehfest mit dem ersten Zahnrad 13 verbunden. In Fig. 5 ist die zweite Schaltstellung der Schalteinrichtung 12 (entsprechend einer zweiten Verschiebestellung der Schiebehülse 26) dargestellt, in der sowohl der erste Verbindungsbereich 27 drehfest mit dem ersten Übertragungsbereich 28 verbunden ist als auch ein zweiter Verbindungsbereich 29 (ebenfalls als Verzahnungsbereich realisiert) der Schiebehülse 26 drehfest mit einem zweiten Übertragungsbereich 30 (ebenfalls als Verzahnungsbereich realisiert) des zweiten Zahnrades 15 befindet. Während der erste Verbindungsbereich 27 vorzugsweise durch das Schiebeteil 47 realisiert ist, ist der zweite Verbindungsbereich 29 vorzugsweise unmittelbar durch den Grundkörper 44 realisiert. Gemäß der in Fig. 6 gezeigten dritten Schaltstellung der Schalteinrichtung 12 (entsprechend einer dritten Verschiebestellung der Schiebehülse 26) sind die beiden Zahnräder 13 und 15 schließlich drehfest miteinander verbunden, wobei die Motorwelle 4 von dem ersten Zahnrad 13 und somit auch von dem zweiten Zahnrad 15 rotatorisch entkoppelt ist. Die Schiebehülse 26 befindet sich somit mit ihrem ersten Verbindungsbereich 27 außer Zahneingriff mit dem ersten Übertragungsbereich 28.

In Verbindung mit den Fign. 3, 5 und 6 ist zudem zu erkennen, dass zur Abstützung der Schiebehülse 26 in der jeweiligen Verschiebestellung eine Rastiereinheit 25 vorgesehen ist. Die Rastiereinheit 25 ist ebenfalls in dem ersten Zahnrad 13 integriert. Die Rastiereinheit 25 weist ein Rastelement 34 auf, das in dem ersten Zahnrad 13 radial verschiebbar angeordnet ist und mit einer Rastkontur 33 in der Schiebehülse 26 zusammenwirkt. Das Rastelement 34 stützt die Schiebehülse 26 in ihrer jeweiligen Verschiebestellung verschiebefest relativ zu dem ersten Zahnrad 13 ab.

Wie zudem in den Fign. 3, 5 und 6 erkennbar, ist in den Ausführungen die Motorwelle 4 auf typische Weise relativ zu dem Gehäuse 48 drehbar gelagert. Zwischen zwei Stützlagern 49, an denen die Motorwelle 4 relativ zu dem Gehäuse 48 abgestützt ist, sind die beiden ersten und zweiten Zahnräder 13, 15 relativ verdrehbar auf der Außenseite der Motorwelle 4 gelagert. Das zweite Zahnrad 15 / der zweite Übertragungsbereich 30 befindet sich auf einer zweiten axialen Seite 35b des ersten Zahnrades 13, die dem zu einer ersten axialen Seite 35a hin angeordneten ersten Übertragungsbereich 28 abgewandt ist.

Somit sind erfindungsgemäß die in Fig. 4 veranschaulichten Betriebszustände durch das Antriebssystem 1 realisierbar. In Fig. 4 ist mit Verbrenner allgemein die mit der Verbrennungskraftmaschine 3 gekoppelte Motorwelle 4 bezeichnet, als Generator das erste Zahnrad 13 und als Abtrieb das zweite Zahnrad 15. In einem typischen seriellen Fahrbetrieb (in der ersten Schaltstellung der Schalteinrichtung 12) treibt die Verbrennungskraftmaschine 3 den ersten Elektromotor 6 an, der wiederum elektrisch den zweiten Elektromotor 8 mit Antriebsenergie versorgt. Der zweite Elektromotor 8 bringt ein Drehmoment auf die Räder 9a, 9b auf. Der erste Elektromotor 6 dient dabei zur Erzeugung einer entsprechenden elektrischen Energie, die in einer Batterie zwischengespeichert wird. Ein elektrischer Fahrzustand bei entkoppelter Verbrennungskraftmaschine 3 (gemäß der dritten Schaltstellung der Schalteinrichtung 12) erfolgt durch Betrieb des zweiten Elektromotors 8 (mit einer elektrischen Energie aus der Batterie). Ein verbrennungsmotorisches Fahren erfolgt typischerweise in der zweiten Schaltstellung der Schalteinrichtung 12, indem sowohl die Verbrennungskraftmaschine 3, der erste Elektromotor 6 als auch der zweite Elektromotor 8 mit dem ersten Zahnrad 13 gekoppelt sind. Ein Standladen erfolgt typischerweise ebenfalls in der ersten Schaltstellung.

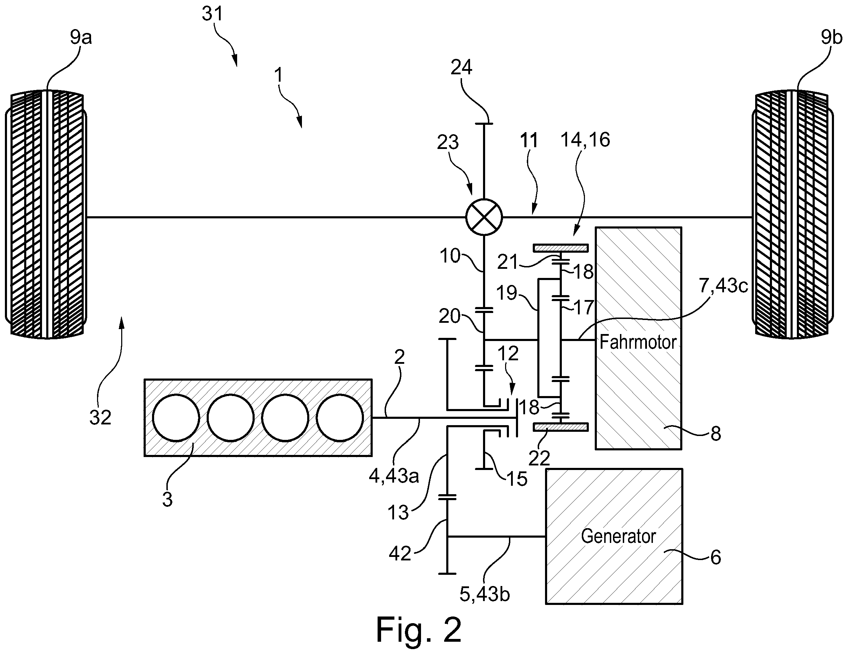

In Verbindung mit Fig. 2 ist schließlich ein weiteres bevorzugtes zweites Ausführungsbeispiele realisiert, das im Wesentlichen gemäß dem ersten Ausführungsbeispiel umgesetzt ist. Der Kürze wegen wird daher lediglich auf die Unterschiede zu diesen beiden Ausführungsbeispielen eingegangen. Wie in Fig. 2 ersichtlich, befindet sich das zweite Zahnrad 15 nicht mehr in direktem Zahneingriff mit dem Antriebsteil 10, sondern unter Zwischenschaltung des Zwischenzahnrads 20 in indirekter Drehverbindung mit dem Antriebsteil 10. Umgekehrt befindet sich das Zwischenzahnrad 20 somit in direktem Zahneingriff mit dem Antriebsteil 10 sowie dem zweiten Zahnrad 15. Auch sind die beiden Elektromotoren 6, 8 nun gegensinnig im Vergleich zu Fig. 2 in Bezug auf die erste Drehachse 43a angeordnet, wobei der zweite Elektromotor 8 samt dem Planetenteilgetriebe 16 näher zur Antriebsachse 32 hin angeordnet ist als der erste Elektromotor 6.

In anderen Worten ausgedrückt, wird durch das erfindungsgemäße Antriebssystem 1 eine Struktur für Hybridfahrzeuge bereitgestellt, die einen direkten Verbrenner-Durchtrieb zum Rad 9a, 9b vorsieht. Bei solchen Fahrzeug- bzw. Getriebekonzepten sind folgende Fahrmodi darzustellen: A) Serielles Fahren: Verbrenner 3 und Generator 6 erzeugen elektrische Energie, um den Fahrmotor 8 zu betreiben; B) Elektrisches Fahren aus Batterie, wobei der Verbrenner 3 abgekoppelt ist; C) Verbrenner-Betrieb: Verbrenner 3 ist direkt mit den Rädern 9a, 9b verbunden; D) Standladen: wie A), nur bei stehendem Fahrzeug 31. Die einzelnen Fahrmodi und Schaltzustände des Schaltelementes 12 sind in der Tabelle nach Fig. 4 grafisch dargestellt. Zu erkennen ist dabei, dass der Generator 6 in jedem der Fahrmodi aktiv ist und somit ein zentrales Element des Aufbaus / Antriebssystems 1 darstellt. Daraus ergibt sich, dass eine technische Ausführung zum Verbinden der Ein- und Ausgänge durch z.B. zwei Verbindungselemente 27, 29 möglich ist. Dabei ist das erste Verbindungselement 27 zwischen der Motorwelle 4 und dem ersten Zahnrad 13, und das zweite Verbindungselement 29 zwischen dem ersten Zahnrad 13 und dem zweiten Zahnrad wirkend angeordnet. Denkbar sind auch alle Arten von form- oder reibschlüssigen, hydrostatischen, magnetischen oder anderen Verbindungen. Besonders vorteilhaft ist eine mit den Fign. 3, 5 und 6 dargestellte Lösung, die zur Betätigung nur ein Aktuator-System 36 benötigt.

Das Schaltelement 12 ist auf Basis einer Doppelschaltsynchronisierung ausgeführt. Im Gegensatz zu einer herkömmlichen Ausführung besitzt diese keine Neutralstellung sondern verbindet in der Mittelposition alle drei Elemente 4, 13 ,15. In Fig. 3 befindet sich die Schiebemuffe 26 links. Somit ist ein serieller Betrieb umgesetzt, eine Verbindung von Verbrenner 3 mit Generator 6 liegt vor. In Fig. 5 ist die Schiebemuffe 26 mittig. Somit ist ein Verbrenner-Betrieb ermöglicht, in dem der Verbrenner 3 mit den Rädern 9a, 9b sowie dem Generator 6 verbunden ist. In Fig. 6 befindet sich die Schiebemuffe rechts. Dabei ist ein elektrisches Fahren aus einer Batterie möglich, wobei der Generator 6 mit dem Abtrieb verbunden ist. Das Schaltelement 12 besteht aus zwei Synchronisationseinheiten mit den dazugehörigen Synchroverzahnungen sowie einer Schiebemuffe 12 mit Eingriff für das Betätigungselement und einer Arretierung 25 für die einzelnen Schaltpositionen. Die Arretierungselemente 34 sind in dem ersten Zahnrad 13 integriert. Das Zahnrad 13 ist mit Durchgriffen versehen, wodurch die Schiebemuffe 26 beide seitlichen Elemente verbindet und trotzdem mit nur einem Betätigungssystem aktuiert werden kann.

### Bezugszeichenliste

- 1: Antriebssystem
- 2: Ausgangswelle
- 3: Verbrennungskraftmaschine
- 4: Motorwelle
- 5: erste Rotorwelle
- 6: erster Elektromotor
- 7: zweite Rotorwelle
- 8: zweiter Elektromotor
- 9a: erstes Rad
- 9b: zweites Rad
- 10: Antriebsteil
- 11: Getriebeeinheit
- 12: Schalteinrichtung
- 13: erstes Zahnrad
- 14: Planetengetriebestufe
- 15: zweites Zahnrad
- 16: Planetenteilgetriebe
- 17: Sonnenrad
- 18: Planetenrad
- 19: Planetenträger
- 20: Zwischenzahnrad
- 21: Hohlrad
- 22: Bremseinrichtung
- 23: Differentialgetriebe
- 24: Verzahnung
- 25: Rastiereinheit
- 26: Schiebehülse
- 27: erster Verbindungsbereich
- 28: erster Übertragungsbereich
- 29: zweiter Verbindungsbereich
- 30: zweiter Übertragungsbereich
- 31: Kraftfahrzeug
- 32: Antriebsachse
- 33: Rastkontur
- 34: Rastelement
- 35a: erste Seite
- 35b: zweite Seite
- 36: Aktuator
- 37: Hebelmechanismus
- 38: Hebelelement
- 39a: erstes Ende
- 39b: zweites Ende
- 40: Aufnahmekontur
- 41: Schwenkpunkt
- 42: drittes Zahnrad
- 43a: erste Drehachse
- 43b: zweite Drehachse
- 43c: dritte Drehachse
- 44: Grundkörper
- 45: Aufnahmeloch
- 46: Innenverzahnung
- 47: Schiebeteil
- 48: Gehäuse
- 49: Stützlager

## Patentansprüche

1. Schalteinrichtung (12) für ein hybrides Antriebssystem (1) eines Kraftfahrzeuges (31), mit einer zentral angeordneten Welle (4), einem relativ zu der Welle (4) verdrehbar gelagerten ersten Zahnrad (13) und einem relativ zu der Welle (4) verdrehbar gelagerten, entlang der Welle (4) versetzt zu dem ersten Zahnrad (13) angeordneten zweiten Zahnrad (15), einer unmittelbar in dem ersten Zahnrad (13) verschiebbar aufgenommenen sowie drehfest mit dem ersten Zahnrad (13) verbundenen Schiebehülse (26), **dadurch gekennzeichnet, dass** die Schiebehülse (26) derart ausgebildet ist, dass sie in einer ersten Verschiebestellung die Welle (4) drehfest mit dem ersten Zahnrad (13) verbindet, während das zweite Zahnrad (15) rotatorisch von der Welle (4) entkoppelt ist, in einer zweiten Verschiebestellung die Welle (4) sowohl mit dem ersten Zahnrad (13) als auch mit dem zweiten Zahnrad (15) rotatorisch verbindet und in einer dritten Verschiebestellung die beiden Zahnräder (13, 15) miteinander rotatorisch verbindet, während die Welle (4) von den beiden Zahnrädern (13, 15) rotatorisch entkoppelt ist.

2. Schalteinrichtung (12) nach Anspruch 1, **dadurch gekennzeichnet, dass** die Schiebehülse (26) eine Rastkontur (33) aufweist, in welche Rastkontur (33) ein Rastelement (34) in der jeweiligen Verschiebestellung blockierend eingreift.

3. Schalteinrichtung (12) nach Anspruch 2, **dadurch gekennzeichnet, dass** das Rastelement (34) in dem ersten Zahnrad (13) aufgenommen ist.

4. Schalteinrichtung (12) nach einem der Ansprüche 1 bis 3, **dadurch gekennzeichnet, dass** die Schiebehülse (26) einen mit der Welle (4) zusammenwirkenden ersten Verbindungsbereich (27) und einen mit dem zweiten Zahnrad (15) zusammenwirkenden, axial versetzt zu dem ersten Verbindungsbereich (27) angeordneten, zweiten Verbindungsbereich (29) aufweist.

5. Schalteinrichtung (12) nach Anspruch 4, **dadurch gekennzeichnet, dass** ein mit dem ersten Verbindungsbereich (27) koppelbarer Übertragungsbereich (28) der Welle (4) zu einer ersten axialen Seite (35a) des ersten Zahnrades (13) hin angeordnet ist und ein mit dem zweiten Verbindungsbereich (29) koppelbarer Übertragungsbereich (30) des zweiten Zahnrades (15) zu einer der ersten axialen Seite (35a) abgewandten zweiten axialen Seite (35b) des ersten Zahnrades (13) hin angeordnet ist.

6. Schalteinrichtung (12) nach einem der Ansprüche 1 bis 5, **dadurch gekennzeichnet, dass** ein Aktuator (36) über einen Hebelmechanismus (37) auf die Schiebehülse (26) verschiebend einwirkt.

7. Schalteinrichtung (12) nach Anspruch 6, **dadurch gekennzeichnet, dass** ein Hebelelement (38) des Hebelmechanismus (37) mit einem ersten Ende (39a) in eine Aufnahmekontur (40) an der Schiebehülse (26) eingreift und mit einem dem ersten Ende (39a) gegenüberliegenden zweiten Ende (39b) durch den Aktuator (36) zum Schwenken um einen gehäusefesten Schwenkpunkt (41) beaufschlagbar ist.

8. Antriebssystem (1) für ein hybrides Kraftfahrzeug (31) (vorzugsweise serieller Hybridantrieb), mit einer mit einer Ausgangwelle (2) einer Verbrennungskraftmaschine (3) rotatorisch koppelbaren oder gekoppelten Motorwelle (4), einem eine erste Rotorwelle (5) aufweisenden, in einem Hauptbetriebszustand als Generator betriebenen ersten Elektromotor (6), einem eine radial versetzt zu der ersten Rotorwelle (5) angeordnete zweite Rotorwelle (7) aufweisenden, in dem Hauptbetriebszustand als Antriebsmotor betriebenen zweiten Elektromotor (8), einem mit der zweiten Rotorwelle (7) rotatorisch verbundenen und zumindest einem Rad (9a, 9b) des Kraftfahrzeuges (31) rotatorisch verbindbaren Antriebsteil (10) sowie einer zwischen der Motorwelle (4), den beiden Rotorwellen (5, 7) und dem Antriebsteil (10) wirkend eingesetzten, schaltbaren Getriebeeinheit (11), wobei eine eine Schaltstellung der Getriebeeinheit (11) steuernde und nach einem der Ansprüche 1 bis 7 ausgebildete Schalteinrichtung (12) zwischen der Motorwelle (4), einem mit der ersten Rotorwelle (5) permanent rotatorisch gekoppelten ersten Zahnrad (13) und einem mit der zweiten Rotorwelle (7) über eine zusätzliche Planetengetriebestufe (14) permanent rotatorisch gekoppelten zweiten Zahnrad (15) derart wirkend eingesetzt ist, dass die Schalteinrichtung (12) in einer ersten Schaltstellung die Motorwelle (4) mit der ersten Rotorwelle (5) rotatorisch verbindet, während die zweite Rotorwelle (7) von der Motorwelle (4) rotatorisch entkoppelt ist, in einer zweiten Schaltstellung die Motorwelle (4) sowohl mit der ersten Rotorwelle (5) als auch mit der zweiten Rotorwelle (7) rotatorisch verbindet und in einer dritten Schaltstellung die beiden Rotorwellen (5, 7) miteinander rotatorisch verbindet, während die Motorwelle (4) von den beiden Rotorwellen (5, 7) rotatorisch entkoppelt ist.

9. Antriebssystem (1) nach Anspruch 8, **dadurch gekennzeichnet, dass** die Planetengetriebestufe (14) durch ein Planetenteilgetriebe (16) ausgebildet ist, von welchem Planetenteilgetriebe (16) ein Sonnenrad (17) unmittelbar mit der zweiten Rotorwelle (7) permanent verbunden ist, ein mehrere Planetenräder (18) lagernder Planetenträger (19) mit einem Zwischenzahnrad (20), das sich in Zahneingriff mit dem zweiten Zahnrad (15) befindet, verbunden ist und ein Hohlrad (21) mittels einer Bremseinrichtung (22) fahrzeugrahmenfest anordenbar ist.

10. Kraftfahrzeug (31) mit einem Antriebssystem (1) nach Anspruch 8 oder 9, wobei das Antriebsteil (10) mit den Rädern (9a, 9b) des Kraftfahrzeuges (31) rotatorisch gekoppelt ist.

## Claims

1. A selector device (12) for a hybrid drive system (1) of a motor vehicle (31), having a centrally arranged shaft (4), a first gearwheel (13) rotatably mounted relative to the shaft (4) and a second gearwheel (15) rotatably mounted relative to the shaft (4) and arranged offset along the shaft (4) with respect to the first gearwheel (13), a sliding sleeve (26) displaceably received directly in the first gearwheel (13) and connected in a non-rotatable manner to the first gearwheel (13), **characterized in that** the sliding sleeve (26) is designed such that, in a first displacement position, it connects the shaft (4) to the first gearwheel (13) in a non-rotatable manner, while the second gearwheel (15) is rotationally decoupled from the shaft (4), in a second displacement position, it rotationally connects the shaft (4) to both the first gearwheel (13) and the second gearwheel (15), and in a third displacement position, it rotationally connects the two gearwheels (13, 15) to one another while the shaft (4) is rotationally decoupled from the two gearwheels (13, 15).

2. The selector device (12) according to claim 1, **characterized in that** the sliding sleeve (26) has a detent contour (33), in which detent contour (33) a detent element (34) engages in the respective displacement position in a blocking manner.

3. The selector device (12) according to claim 2, **characterized in that** the detent element (34) is received in the first gearwheel (13).

4. The selector device (12) according to any one of claims 1 to 3, **characterized in that** the sliding sleeve (26) has a first connecting region (27) that interacts with the shaft (4) and a second connecting region (29) that interacts with the second gearwheel (15) and is arranged axially offset from the first connecting region (27).

5. The selector device (12) according to claim 4, **characterized in that** a transmission region (28) of the shaft (4), which can be coupled to the first connecting region (27), is arranged towards a first axial side (35a) of the first gearwheel (13), and a transmission region (30) of the second gearwheel (15), which can be coupled to the second connecting region (29), is arranged towards a second axial side (35b) of the first gearwheel (13) facing away from the first axial side (35a).

6. The selector device (12) according to any one of claims 1 to 5, **characterized in that** an actuator (36) acts in a displacing manner on the sliding sleeve (26) via a lever mechanism (37).

7. The selector device (12) according to claim 6, **characterized in that** a lever element (38) of the lever mechanism (37) engages with a first end (39a) in a receiving contour (40) on the sliding sleeve (26) and can be acted upon with a second end (39b) opposite the first end (39a) by the actuator (36) for pivoting about a pivot point (41) fixed to the housing.

8. A drive system (1) for a hybrid motor vehicle (31) (preferably serial hybrid drive), having a motor shaft (4) that can be or is rotationally coupled to an output shaft (2) of an internal combustion engine (3), having a first electric motor (6) that has a first rotor shaft (5) and is operated as a generator in a main operating state, having a second electric motor (8) that has a second rotor shaft (7) arranged radially offset with respect to the first rotor shaft (5) and is operated as a drive motor in the main operating state, having a drive part (10) that is rotationally connected to the second rotor shaft (7) and can be rotationally connected to at least one wheel (9a, 9b) of the motor vehicle (31), and a shiftable transmission unit (11) that is operatively inserted between the motor shaft (4), the two rotor shafts (5, 7) and the drive part (10), wherein a selector device (12) controlling a shift position of the transmission unit (11) and designed according to any one of claims 1 to 7 is operatively inserted between the motor shaft (4), a first gearwheel (13) permanently rotationally coupled to the first rotor shaft (5) and a second gearwheel (15) permanently rotationally coupled to the second rotor shaft (7) via an additional planetary gear stage (14) in such a manner in that, in a first shift position, the selector device (12) rotationally connects the motor shaft (4) to the first rotor shaft (5), while the second rotor shaft (7) is rotationally decoupled from the motor shaft (4), in a second shift position, rotationally connects the motor shaft (4) to both the first rotor shaft (5) and the second rotor shaft (7), and in a third shift position, rotationally connects the two rotor shafts (5, 7) to one another while the motor shaft (4) is rotationally decoupled from the two rotor shafts (5, 7).

9. A drive system (1) according to claim 8, **characterized in that** the planetary gear stage (14) is formed by a planetary sub-transmission (16), of which planetary sub-transmission (16) a sun gear (17) is permanently connected directly to the second rotor shaft (7), a planet carrier (19) bearing a plurality of planet gears (18) is connected to an intermediate gearwheel (20) which is in meshing engagement with the second gearwheel (15), and a ring gear (21) can be arranged fixed to the vehicle frame by means of a brake device (22).

10. A motor vehicle (31) having a drive system (1) according to claim 8 or 9, wherein the drive part (10) is rotationally coupled to the wheels (9a, 9b) of the motor vehicle (31).

## Revendications

1. Dispositif de commutation (12) pour un système d'entraînement hybride (1) d'un véhicule automobile (31), doté d'un arbre (4) agencé au centre, d'une première roue dentée (13) qui est montée rotative par rapport à l'arbre (4) et d'une seconde roue dentée (15) montée rotative par rapport à l'arbre (4) et disposée le long de l'arbre (4) de manière décalée par rapport à la première roue dentée (13), d'un manchon coulissant (26) qui est reçu de manière coulissante directement dans la première roue dentée (13) et qui est solidaire en rotation de la première roue dentée (13), **caractérisé en ce que** le manchon coulissant (26) est conçu de façon, dans une première position de déplacement, à relier l'arbre (4) à la première roue dentée (13) de manière solidaire en rotation, tandis que la seconde roue dentée (15) est découplée en rotation de l'arbre (4), dans une deuxième position de déplacement, l'arbre (4) tourne aussi bien avec la première roue dentée (13) qu'avec la seconde roue dentée (15) et dans une troisième position de déplacement, les deux roues dentées (13, 15) sont reliées en rotation l'un à l'autre, tandis que l'arbre (4) est découplé en rotation des deux roues dentées (13, 15).

2. Dispositif de commutation (12) selon la revendication 1, **caractérisé en ce que** le manchon coulissant (26) présente un contour d'encliquetage (33), contour d'encliquetage (33) dans lequel un élément d'encliquetage (34) vient en prise de manière bloquée dans la position de déplacement respective.

3. Dispositif de commutation (12) selon la revendication 2, **caractérisé en ce que** l'élément d'encliquetage (34) est logé dans la première roue dentée (13).

4. Dispositif de commutation (12) selon l'une quelconque des revendications 1 à 3, **caractérisé en ce que** le manchon coulissant (26) présente une première zone de liaison (27) qui coopère avec l'arbre (4) et une seconde zone de liaison (29) qui coopère avec la seconde roue dentée (15) et décalée axialement par rapport à la première zone de liaison (27).

5. Dispositif de commutation (12) selon la revendication 4, **caractérisé en ce qu'**une zone de transmission (28) de l'arbre (4) pouvant être couplée à la première zone de liaison (27) est agencée vers un premier côté axial (35a) de la première roue dentée (13) et une zone de transmission (30) de la seconde roue dentée (15) pouvant être couplée à la seconde zone de liaison (29) est disposée vers un deuxième côté axial (35b) de la première roue dentée (13) tourné à l'opposé du premier côté axial (35a).

6. Dispositif de commutation (12) selon l'une quelconque des revendications 1 à 5, **caractérisé en ce qu'**un actionneur (36) exerce un effet de déplacement sur le manchon coulissant (26) par l'intermédiaire d'un mécanisme à levier (37).

7. Dispositif de commutation (12) selon la revendication 6, **caractérisé en ce qu'**un élément de levier (38) du mécanisme à levier (37) vient en prise avec une première extrémité (39a) dans un contour de réception (40) sur le manchon coulissant (26) et peut être sollicité par une seconde extrémité (39b) opposée à la première extrémité (39a) par l'actionneur (36) pour pivoter autour d'un point de pivotement (41) fixé au boîtier.

8. Système d'entraînement (1) pour un véhicule automobile hybride (31) (de préférence un entraînement hybride série), comprenant un arbre moteur (4) pouvant être ou étant couplé en rotation à un arbre de sortie (2) d'un moteur à combustion interne (3), un premier moteur électrique (6) qui présente un premier arbre de rotor (5) et qui fonctionne en tant que générateur dans l'état de fonctionnement principal, un second arbre de rotor (7) présentant un décalage radial par rapport au premier arbre de rotor (5), un second moteur électrique (8) fonctionnant en tant que moteur d'entraînement dans l'état de fonctionnement principal, une partie d'entraînement (10) reliée en rotation au second arbre de rotor (7) et pouvant être reliée en rotation à au moins une roue (9a, 9b) du véhicule automobile (31), ainsi qu'une unité de transmission (11) commutable, insérée de façon à agir entre l'arbre moteur (4), les deux arbres de rotor (5, 7) et la partie d'entraînement (10), un dispositif de commutation (12) commandant une position de commutation de l'unité de transmission (11) et conçu selon l'une quelconque des revendications 1 à 7 étant inséré de manière à agir entre l'arbre moteur (4), une première roue dentée (13) couplée en rotation de manière permanente au premier arbre de rotor (5) et une seconde roue dentée (15) couplée en rotation de manière permanente au second arbre de rotor (7) par l'intermédiaire d'un étage d'engrenage planétaire supplémentaire (14), de façon que le dispositif de commutation (12), dans une première position de commutation, relie en rotation l'arbre moteur (4) au premier arbre de rotor (5), tandis que le second arbre de rotor (7) est découplé en rotation de l'arbre moteur (4), dans une deuxième position de commutation, l'arbre moteur (4) soit relié en rotation aussi bien au premier arbre de rotor (5) qu'au second arbre de rotor (7) et dans une troisième position de commutation, les deux arbres de rotor (5, 7) soient reliés en rotation l'un à l'autre, tandis que l'arbre moteur (4) est découplé en rotation des deux arbres de rotor (5, 7).

9. Système d'entraînement (1) selon la revendication 8, **caractérisé en ce que** l'étage d'engrenage planétaire (14) est formé par un train d'engrenage planétaire (16), train d'engrenage planétaire (16) dont une roue solaire (17) est reliée en permanence directement au second arbre de rotor (7), un porte-satellites (19) supportant plusieurs pignons planétaires (18) est relié à une roue dentée intermédiaire (20) qui s'engrène avec la seconde roue dentée (15) et une couronne (21) peut être agencée de manière fixe au châssis du véhicule au moyen d'un dispositif de freinage (22).

10. Véhicule automobile (31) avec un système d'entraînement (1) selon la revendication 8 ou 9, la partie d'entraînement (10) étant couplée en rotation aux roues (9a, 9b) du véhicule automobile (31).
